Europäisches Patentamt

European Patent Office

Office européen des brevets

(11) Publication number: **0 330 262**
**A2**

## EUROPEAN PATENT APPLICATION

(21) Application number: **89200365.8**

(51) Int. Cl.⁴: **G01N 9/24**

(22) Date of filing: **14.02.89**

(30) Priority: **26.02.88 GB 8804603**

(43) Date of publication of application:
**30.08.89 Bulletin 89/35**

(84) Designated Contracting States:
**DE GB IT NL SE**

(71) Applicant: **SHELL INTERNATIONALE**
**RESEARCH MAATSCHAPPIJ B.V.**
**Carel van Bylandtlaan 30**
**NL-2596 HR Den Haag(NL)**

(72) Inventor: **Van der Burgt, Maarten Johannes**
**Carel van Bylandtlaan 30**
**NL-2596 HR The Hague(NL)**

(74) Representative: **Aalbers, Onno et al**
**P.O. Box 302**
**NL-2501 CH The Hague(NL)**

(54) **Apparatus for measuring density of a finely divided solid carbon-containing fuel flow.**

(57) For a proper solid fuel flow measurement the velocity and the density of the flow must be known. The density can be determined very accurately with a gamma-ray densitometer. In order to minimize the effect of the tube wall the gamma-ray source and -counter are positioned such that the rays "look" through a longitudinal section of the tube taking care that the disturbing effects of the tube bends are minimized. This is accomplished by:

    1) using symmetrical bends for connecting a straight fuel supply pipe with a straight fuel measuring pipe and connecting the latter with a straight fuel exit pipe, and advantageously

    2) using parallel fuel supply and exit pipes.

EP 0 330 262 A2

# APPARATUS FOR MEASURING DENSITY OF A FINELY DIVIDED SOLID CARBON-CONTAINING FUEL FLOW

The invention relates to an apparatus for measuring the density of a finely divided solid carbon-containing fuel flow.

Finely divided solid carbon-containing fuels are applied in processes for the preparation of synthesis gas by the partial combustion of a finely divided solid carbon-containing fuel with an oxygen-containing gas in a reactor wherein liquid slag formed during the partial combustion process is removed through an outlet in the bottom of the reactor and passed by gravity through a slag discharge means into a water bath or slag quenching vessel where it is solidified by quenching.

The partial combustion of finely divided solid carbon-containing fuel with substantially pure oxygen as oxygen-containing gas yields synthesis gas mainly consisting of carbon monoxide and hydrogen. When the oxygen-containing gas is air or oxygen-enriched air, the synthesis gas formed of course also contains a substantial quantity of nitrogen. By finely divided solid carbon-containing fuel is generally meant coal or another solid fuel, such as brown coal, peat, wood, coke, soot etc., but mixtures of liquid or gas and particulate solid fuels, are also possible.

Advantageously, a moderator is also introduced into the reactor. The object of the moderator is to exercise a moderating effect on the temperature on the reactor. This is ensured by endothermic reaction between the moderator and the reactants and/or products of the synthesis gas preparation. Suitable moderators are steam and carbon dioxide.

The gasification is advantageously carried out at a temperature in the range from 1200 to 1700 °C and at a pressure in the range from 1 to 200 bar.

The reactor in which the preparation of synthesis gas takes place may have any suitable shape.

The supply of finely divided solid carbon-containing fuel and oxygen-containing gas to the reactor can take place in any manner suitable for the purpose and will not be described in detail.

Liquid slag formed in the partial combustion reaction drops down and is drained through the outlet located in the reactor bottom.

In partial oxidation processes of finely divided solid carbon-containing fuels, such as for example coal gasification, the fuel is fed from a supply device to a gasifier by means of a suitable carrier fluid.

In such processes it is important to determine the mass flow of the fine-grained or dust-like solid fuel into the gasifier.

For a proper fuel mass flow measurement the velocity and the density of the fuel flow must be determined. The principles of such determinations are known to those skilled in the art and will not be described in detail.

Usually, in the density measurement the flow of fuel (which is suspended in a gaseous, vaporous or liquid medium) is measured immediately prior to entry into the gasifier.

It is a common practice to carry out a radiometric density measurement (in particular by means of gamma-radiation). However, in known devices, gamma-ray densitometers are applied wherein the gamma-rays pass from a source perpendicular to the flow of solids to a detector.

The known devices for density measurement are arranged at both sides of a straight inlet conduit for fuel-carrier fluid mixture prior to its entry into the gasifier.

However, such an arrangement of the source and detector has several disadvantages: in particular the dense tube walls have a disturbing influence on the measurements; further, disturbances due to gravitational settling and inevitable inhomogenity over the cross section of the tube may occur.

Thus, it is an object of the invention to provide an apparatus for gamma-ray-density measurements in finely divided solid carbon-containing fuel flow which compensates for such disadvantageous effects.

Therefore, the invention provides an apparatus for measuring the density of a finely divided solid carbon-containing fuel flow prior to its entry into a gasifier, characterized by:
- a measuring pipe or tube having two bends in a vertical plane, said pipe at its one end being connected to a straight fuel supply pipe and at its other end being connected to a straight fuel outlet pipe leading to the gasifier;
- a gamma-ray-source arranged at one side of the measuring pipe; and
- a gamma-ray-counter arranged at the other side of the measuring pipe, wherein the source, counter and pipes are all in one flat plane and said source and counter being positioned in such a manner, that, in operation, the gamma-rays pass parallel to the flow of solid carbon-containing fuel through the measuring pipe.

2

In this manner, disturbing effects of gravitational settling and the like are minimized.

The invention will now be described by way of example in more detail by reference to the accompanying drawings, in which:

Fig. 1 represents schematically a conventional arrangement of gamma-ray measurement in solid fuel flow; and

Fig. 2 represents schematically a sectional view of the arrangement of the invention.

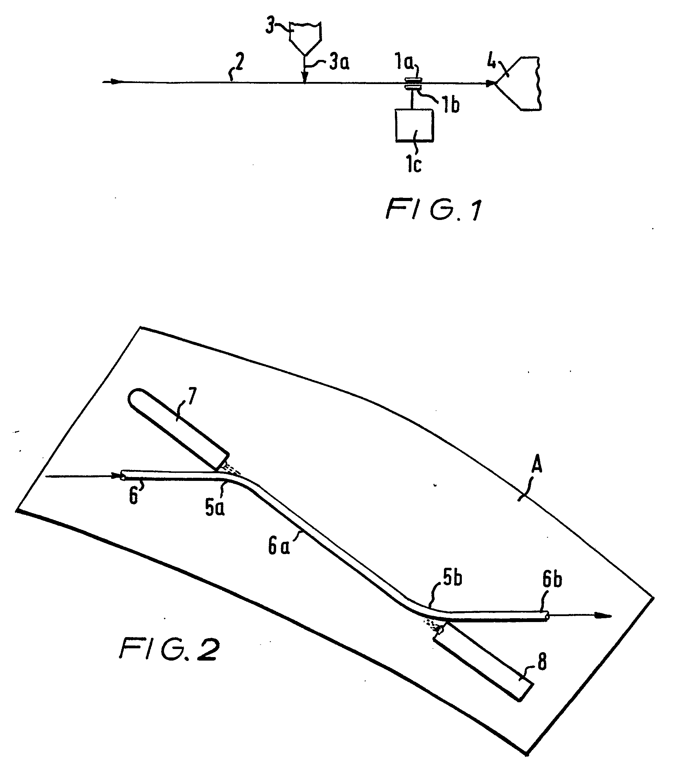

Referring now to Fig. 1 a device for gamma-ray measurements consisting of a source 1a and a detector or counter 1b is arranged at both sides of an inlet conduit 2 for a fuel-carrier fluid mixture immediately prior to the entry of the mixture into a gasifier 4. The detector 1b is in any suitable manner connected to a signal processing device 1c. The gamma-rays pass from the source 1a perpendicular to the flow of solids to the detector 1b.

The fuel is passed from a supply 3 via a duct 3a into the carrier fluid which is received through the conduit 2. The carrier fluid is for example nitrogen, but it will be appreciated that any suitable carrier fluid can be applied. For the sake of clarity means for fuel flow velocity measurements have not been shown, since such means are known to those skilled in the art.

In Fig. 2 the apparatus of the invention comprises a pipe or tube provided with two symmetrical bends 5a and 5b in a vertical plane A forming a - somewhat distorted - S (6, 6a, 6b).

A gamma-ray-source 7 is located at the first bend 5a at the one side of the tube and a gamma-ray-counter 8 at the second bend 5b at the other side of the tube in such a way that, in operation, the gamma-rays originating from the source pass parallel to the flow of solids through the tube.

The source and counter are in one flat vertical plane with the fuel flow pipe or tube.

The first bend 5a connects the straight fuel supply pipe 6 with the straight fuel measuring pipe 6a and this pipe 6a is connected through the second bend 5b with the straight exit or outlet pipe 6b leading to the gasifier (not shown for reasons of clarity). It will be appreciated that the measuring pipe 6a may be arranged essentially vertically, wherein the gamma-rays cover the whole cross-section of the pipe and there are no gravity settlings.

Further, it will be appreciated that the arrangement can be applied upflow and downflow, i.e. the fuel can be supplied from 6 to 6b or vice versa. In the latter case the gasifier is connected to the pipe 6 and the fuel is supplied to the pipe 6b.

It will further be appreciated that the velocity measurements of the fuel flow required to obtain information on the mass flow are not part of the invention and will not be described.

Advantageously, the fuel supply pipe and the exit pipe are parallel. In an advantageous embodiment of the invention the length of the measuring pipe is 100-200 cm; the radius of the pipe bends is 5-10 times the pipe diameter; the inner pipe diameter is 0.4-15 cm. The suspension density is 50-450 $kg/m^3$.

The operation of the invention will now be described by reference to the following example.

Example

| fuel flow: 30 tons/h = | 8.3 kg/s |
|---|---|
| suspension velocity : | 10 m/s |
| suspension density : | 350 $kg/m^3$ |
| inner pipe diameter : | 5.5 cm |
| length of measuring pipe : | 100 cm |
| radius of pipe bends : | 5-10 times pipe diameter |

Various modifications of the invention will become apparent to those skilled in the art from the foregoing description and accompanying drawings. Such modifications are intended to fall within the scope of the appended claims.

**Claims**

1. An apparatus for measuring the density of a finely divided solid carbon-containing fuel flow prior to its entry into a gasifier, characterized by:
- a measuring pipe or tube having two bends in a vertical plane, said pipe at its one end being connected to a straight fuel supply pipe and at its other end being connected to a straight fuel outlet pipe leading to the gasifier;
- a gamma-ray-source arranged at one side of the measuring pipe; and
- a gamma-ray-counter arranged at the other side of the measuring pipe, wherein the source, counter and pipes are all in one flat plane and said source and counter being positioned in such a manner, that, in operation, the gamma-rays pass parallel to the flow of solid carbon-containing fuel through the measuring pipe.

2. The apparatus as claimed in claim 1 characterized in that the fuel supply pipe and the fuel exit pipe are arranged parallel.

3. The apparatus as claimed in claim 1 or 2 characterized in that the measuring pipe is arranged essentially vertically.

4. The apparatus as claimed in any one of claims 1-3 characterized in that the said one flat plane is vertical.

5. The apparatus as claimed in any one of claims 1-4 characterized in that the bends are symmetrical.

6. The apparatus as claimed in any one of claims 1-5 characterized in that the length of the measuring pipe is 100-200 cm.

7. The apparatus as claimed in any one of claims 1-6 characterized in that the inner pipe diameter is 0.4-15 cm.

8. The apparatus as claimed in any one of claims 1-7 characterized in that the radius of the pipe bends is 5-10 times the pipe diameter.

FIG.1

FIG.2